# EUROPEAN PATENT APPLICATION

(11) **EP 3 156 644 A1**
(43) Date of publication of application: **19.04.2017**
(21) Application number: 15189797.2
(22) Date of filing: 14.10.2015
(51) Int. Cl.: F03D 1/06, F03D 7/02

(54) **DETERMINING A DEFLECTION OF A ROTOR BLADE OF A WIND TURBINE**

(71) Applicant: Siemens Aktiengesellschaft, 80333 München (DE)
(72) Inventor: Enevoldsen, Peder Bay, 7100 Vejle (DK); Gonzalez, Alejandro Gomez, 8000 Aarhus (DK)

(57) **Abstract**

A method is proposed for determining a deflection of a rotor blade (200) of a wind turbine comprising the following steps:
- fixing at least one electrical conductor loop (210) via fixing points (230, 231) to at least one surface (225) of the rotor blade (200), wherein the at least one electrical conductor loop (210) is arranged such that
- due to the deflection of the rotor blade (200) an extension (243) of the at least one conductor loop (210) is forced between at least two of the fixing points (230, 231),
- the extended electrical conductor loop keeps closed if the deflection of the rotor blade (200) is below the defined threshold,
- the extended conductor loop opens if the deflection of the rotor blade (200) is beyond the defined threshold.

Further an arrangement, a sensor, a rotor blade and a wind turbine are suggested.

## Description

The invention relates to a method and to an arrangement for determining a deflection of a rotor blade. Further, a sensor and a rotor blade and a wind turbine are suggested.

Due to increasing power to be provided by wind turbines, rotor blades representing essential driving components of such wind turbines are optimized with respect to, e.g., weight, aerodynamic characteristics and most possible generation of electrical power.

Thereby, design and shape of the rotor blades is characterized or limited by several factors. As an example, in particular for long slender and flexible rotor blades, one of the key characteristics during operation of a wind turbine is a clearance between a tip of the rotor blade and a surface of a tower of the wind turbine during extreme situations in order to avoid collisions. The distance between the tower and the tip end of the blade is also referred to as "blade tip/tower clearance".

Tip deflections have limiting consequences on the structure of the rotor blades, the same as limiting economical consequences. Consequently, the level of loading which the blade can carry is often limited by this factor and thus the amount of energy extracted as well as the cost of energy.

The problem of maintaining blade tip/tower clearance may be solved from the structural design perspective by, e.g., increasing stiffness of a main spar of the blade. This is a purely structural solution which is related to higher blade mass and thus higher blade cost as well as higher fatigue loads in both the blades and the hub components.

From an aerodynamic design perspective the problem of high tip deflections may be solved according to one out of the following exemplary options:
- Increasing slenderness of the blades:
   A disadvantage of this solution might be the negative affection of the aerodynamic performance of the wind turbine during normal operation. As a further drawback structural dimensions like "building hight" may in some cases become very small;
- Reduction of an aerodynamic twist of the blade towards the tip:
   A disadvantage of that solution would be the loss of performance during normal operation;
- Use of active flaps:
   The disadvantage here is the necessary implementation of active elements in the blade;
- Increasing a relative thickness of airfoils in order to increase the structural stiffness:
   The drawback here is the poor performance of thinner airfoils in comparison with thicker airfoils.
- Reduction of a pitch angle of the blade in critical loading situations which has negative consequences to Annular Energy Production, AEP.

The object is thus to overcome such disadvantages and in particular to provide an improved approach for detecting and avoiding extreme deflection of a rotor blade.

This problem is solved according to the features of the independent claims. Further embodiments result from the depending claims.

In order to overcome this problem, a method is provided for determining a deflection of a rotor blade of a wind turbine comprising the following steps:
- fixing at least one electrical conductor loop via fixing points to at least one surface of the rotor blade, wherein the at least one electrical conductor loop is arranged such that
- due to the deflection of the rotor blade an extension of the at least one conductor loop is forced between at least two of the fixing points,
- the extended electrical conductor loop keeps closed if the deflection of the rotor blade is below the defined threshold,
- the extended conductor loop opens if the deflection of the rotor blade is beyond the defined threshold.

The proposed solution enables detection of extreme deflection of a rotor blade mainly based on the fact that under extreme conditions and due to elastic deformations of the blade a suction side of the blade will be in compression whereas a pressure side of the blade will be in extension. Thus, any element like, e.g., an electrical conductor loop being assigned or fixed to the surface (which can be inner or outer surface) of the rotor blade will experience the same or similar elastic deformation.

As an example, the extension of a blade segment will be proportional to the to the original length of the segment multiplied by the strain level. A strain level of, e.g., 3000 microstrains [10^-6 mm/mm] valid for a blade segment with a length of 10 m would result in a total deformation, i.e. extension of 3000*10^-6 * 10000 = 30 mm.

In other words, for a blade length of, e.g., a couple of meters, the total deformation will result in a couple of centimeters. This variation in length can be used in different ways for monitoring provided that the element has the freedom to deform (i.e. not firmly attached to the blade surface) independently of the blade.

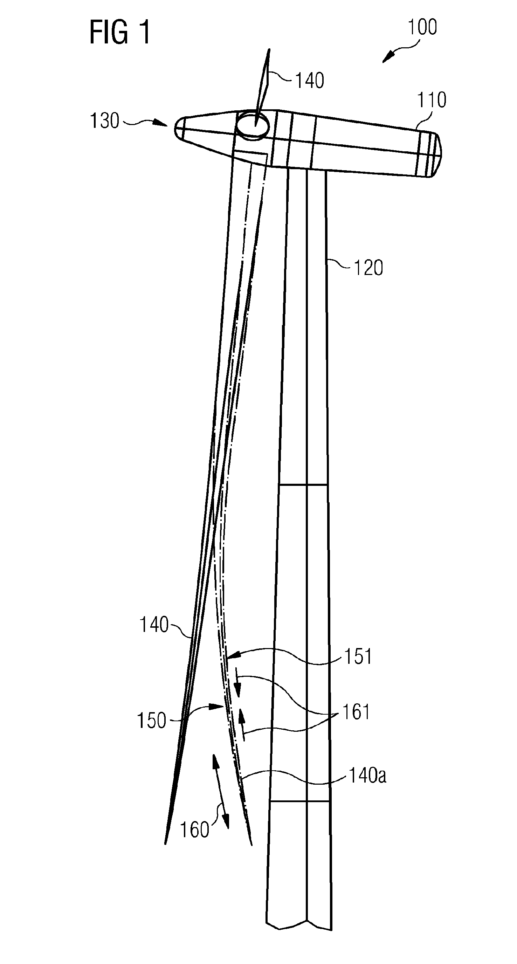

Fig.1 is exemplarily illustrating one possible embodiment of deformation of a rotor blade. According to Fig.1, a nacelle 110 is rotatable mounted on top of a tower 120 of a wind turbine 100. A rotor 130 is attached to an upwind side of the nacelle 110. The rotor 130 includes a central rotor hub and a plurality of rotor blades 140 mounted to and extending radially from the rotor hub defining a rotor plane.

Thereby, assuming an exemplary tip deflection of 5 meter for a 45 meter blade 140, a inner surface of a pressure side of the blade 140 would be extended about 40 mm which would be sufficient to implement the proposed solution. In Fig.1 a corresponding rotor blade under pressure showing the aforementioned deflection is exemplary visualized by a rotor blade 140a wherein the pressure side of the blade 140a is indicated by an arrow 150 in Fig.1 and wherein a suction side of the blade 140a is indicated by an arrow 151. Further, an extension of the pressure side 150 due to, e.g. deflection of the rotor blade is exemplarily illustrated by an arrow 160 wherein a corresponding contraction of the suction side of the rotor blade is indicated by an arrow 161.

Based on the exemplary scenario as shown in Fig.1, one possible dimension or degree of the extension 160 of an electrical conductor loop (not shown in Fig.1) being assigned or fixed, e.g., to the inner surface of the pressure side 150 of the blade 140 may be about 40 mm which is a sufficient scale for applying the proposed solution.

Electrical conductor loop my be any electrical conductible element which can be attached, mounted or fixed via several fixing points along a longitudinal section of a surface of a rotor blade.

Fixing point may be any element or arrangement allowing an attachment, fastening, fixing or anchorage of at least a part of the electrical conductor loop to the surface of the rotor blade. As an example, a part of the electrical conductor loop may be glued to the surface of the rotor blade providing a proper fixation

Advantageously the fixing points will follow a dynamic definition of the surface of the rotor blade and will also follow dynamic changes of the shape or form of the surface of the rotor blade.

Surface may be the inner of outer surface of a suction side or pressure side of the rotor blade.

Extension of the conductor loop means extracting, pulling apart or extending the conductor loop along its longitudinal direction, e.g. along the longitudinal direction of the rotor blade forced by the dynamic deflection of the rotor blade.

A closed electrical conductor loop means a conductor loop maintaining electrical conductivity without electrical disconnection.

An open electrical conductor loop means a conductor loop without or substantial minor electrical conductivity due to, e.g., an electrical disconnection located between the at least two fixing points.

Several electrical conductor loops may be fixed to the inner and/or outer surface of the suction and/or pressure side of the rotor blade. Thereby the conductor loops may have different, i.e. individual dimensions. Such dimensions like, e.g., different lengths of the conductor loops may be aligned to different kinds of possible deflections of a rotor blade (also referred to as "different levels or degrees of deflection"). As an example, a root part of the rotor blade may comprise a minor degree of deflection than a tip part of the rotor blade showing a major degree of deflection. Using more than one conductor loop according to the proposed solution allows a more accurate determination of any kind of deflection of the rotor blade.

A defined threshold may represent a certain degree of deflection like, e.g. an extreme deflection or bending condition/situation of a rotor blade during operation of the wind turbine. As an example, during extreme deflection of a rotor blade, a tip section of the rotor blade may hit the tower during operation of the wind turbine.

Determining deflections of the rotor blade according to the proposed solution allows identification and prevention of extreme rotor blade deflections. In particular, by using several conductor loops which open or close at different levels, a more accurate estimation of the current blade deflection is possible.

As an advantage, the proposed solution uses the deflection of the rotor blade as a triggering momentum in order to activate a mechanism to detect extreme deflections of a rotor blade.

Methods for preventing extreme rotor blade deflections are an enabler for upscaling and upgrading rotors of existing wind turbines as well as designing larger future rotors, consequently allowing a significant reduction in cost of energy.

In an embodiment, the method comprises
- monitoring at least one electrical characteristic of the at least one electrical conductor loop,
- determining the deflection of the rotor blade based on the at least one monitored electrical characteristic.

In another embodiment, the monitoring of the at least one electrical characteristic comprises a measurement of at least one out of the following electrical parameters concerning the conductor loop:
- an electrical resistance,
- an electrical current through the conductor loop,
- a voltage.

In a further embodiment, an extreme deflection of the rotor blade is determined
- if the measured electrical resistance of the at least one electrical conductor loop exceeds a predetermined threshold, or
- if the electrical current through the at least one electrical conductor loop drops below a predetermined threshold.

In a next embodiment, the at least one electrical conductor loop is fixed at an inner surface of a pressure side of the rotor blade.

It is also an embodiment that a control signal is provided for controlling the operation of the wind turbine based on the determined deflection of the at least one rotor blade.

The problem stated above is also solved by an arrangement for determining a deflection of a rotor blade of a wind turbine comprising:
- at least one electrical conductor loop being fixed via fixing points to at least one surface of the rotor blade, wherein the at least one electrical conductor loop is arranged such that
   - due to the deflection of the rotor blade an extension of the at least one conductor loop is forced between at least two of the fixing points,
   - the extended electrical conductor loop keeps closed if the deflection of the rotor blade is below a defined threshold,
   - the extended conductor loop opens if the deflection of the rotor blade is beyond the defined threshold.

Pursuant to another embodiment, a processing unit is arranged for
- monitoring at least one electrical characteristic of the at least one electrical conductor loop, and
- determining the deflection of the rotor blade based on the at least one monitored electrical characteristic

According to an embodiment, the processing unit is arranged for providing a control signal for controlling the operation of the wind turbine based on the determined deflection of the at least one rotor blade.

According to another embodiment, the at least one electrical conductor loop comprises or is assigned to at least one sliding contact capable of being switched in an open loop circuit or in a closed loop circuit dependent on the deflection of the rotor blade. As an example, a first part of the electrical conductor loop may represent a first sliding element of the sliding contact and a second part of the electrical conductor loop may represent a second sliding element of the sliding contact. Due to forces acting on both parts of the electrical conductor loop via the fixing points both sliding elements may be pulled apart ("open sliding contact") or keep in contact ("closed sliding contact") dependent on the current deflection of the rotor blade.

The problem stated above is also solved by an sensor suitable for determining a deflection of a rotor blade of a wind turbine according to the steps of the method described herein, comprising
- at least one electrical conductor loop suitable to be fixed via fixing points to at least one surface of the rotor blade, such that
   - due to the deflection of the rotor blade an extension of the at least one conductor loop is forced between the at least two fixing points,
   - the extended electrical conductor loop keeps closed if the deflection of the rotor blade is below the defined threshold,
   - the extended conductor loop opens if the deflection of the rotor blade is beyond the defined threshold.

In yet another embodiment, the sensor comprises a processing unit that is arranged for
- monitoring at least one electrical characteristic of the at least one electrical conductor loop, and
- determining the deflection of the at least one rotor blade based on the at least one monitored electrical characteristic.

The solution provided herein further comprises a rotor blade for a wind turbine comprising at least one sensor as described herein.

The problem stated above is also solved by a wind turbine comprising an arrangement as described herein.

Some of the embodiments will be described in more detail, with reference to the following figures:
- Fig.1: exemplarily illustrates an extension of the pressure side of a wind turbine blade upon deflection of the tip;
- Fig.2: shows a schematic view of a rotor blade using an electrical conductor loop according to the proposed solution;
- Fig.3: shows in a schematic view a possible embodiment of a sliding contact according to an exemplary embodiment of the proposed solution;
- Fig.4: shows in a schematic view an alternative exemplary embodiment of a sliding contact according to the proposed solution.

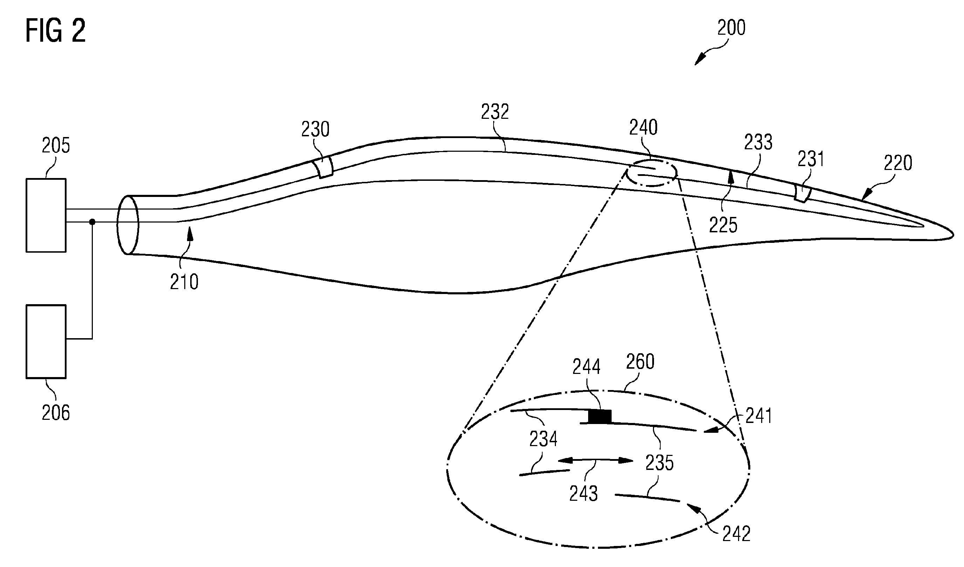

Fig.2 shows a schematic view of a rotor blade 200 with an assigned electrical conductor loop 210 according to the proposed solution. Thereby, the electrical conductor loop 210 is assigned to an inner surface (indicated by an arrow 225) of a pressure side (indicated by an arrow 220) of the rotor blade 200. According to the exemplary embodiment as shown in Fig.2, the electrical conductor loop 210 is fixed via two fixing points 230, 231 to the inner surface 225. According to an alternative embodiment, the electrical conductor loop may be fixed to the inner surface 225 via more than two fixing points (not shown in Fig.2).

The electrical conductor loop 210 comprises two parts 232, 233 wherein a first part 232 is fixed via the fixing point 230 to the inner surface of a root end section of the rotor blade and the second part 233 is fixed via the fixing point 231 to the inner surface of a tip end section of the rotor blade. Both parts 232, 233 of the conductor loop 210 are assigned to a sliding contact 240 providing an electrical connection or disconnection of both parts 232, 233 of the electrical conductor loop 210 dependent on the current deformation of the rotor blade, i.e. dependent on the actual contraction or extension of the surface of the blade 200 causing contraction or extraction forces between the fixing points 230, 231 und thus between both parts 232, 233 of the conductor loop.

It should be noted that according to a further embodiment of the proposed solution several electrical conductor loops may be fixed to the rotor blade opening or closing at different levels or degrees of deflection or deformation of the rotor blade.

The both parts 232, 233 of the electrical conductor loop 210 may be connected with an electrical source 205 providing electrical voltage and/or current to the conductor loop 210. The electrical source 205 may be located in a root section of the rotor blade 200 or in the rotor hub. The electrical conductor loop 210 may be further connected with a monitoring device 206 monitoring electrical characteristics of the conductor loop 210.

In Fig.2 a dotted line 260 shows a more detailed view of the sliding contact 240 dependent on various deformation scenarios of the rotor blade 200. Thereby, a one end of the first part 232 of the electrical conductor loop 210 represents a first sliding element 234 of the sliding contact 240 and one end of the second part 233 of the electrical conductor loop 210 represents a second sliding element 235 of the sliding contact 240.

According to a first deformation scenario (indicated by an arrow 241), showing the sliding contact 240 during normal (i.e. minor) blade deflections, the sliding contact 240 is closed ("closed loop circuit") providing an electrical connection (indicated by a darkened field 244 in the first deformation scenario 241) between both sliding elements 234, 235, i.e. between both parts 232, 233 of the electrical conductor loop 210 with the consequence that electrical current may flow through the conductor loop 210. That flowing of electrical current thought the loop 210 may be recognized by the monitoring device 206 thereby identifying a closed sliding contact 240. Thus, a closed sliding contact 241 is indicating a minor deflection of the rotor blade 200.

According to a second scenario (indicated by an arrow 242), showing the sliding contact 240 during extreme blade deflections, the sliding contact 240 is in extension ("open loop circuit") due to extracting forces (indicated by an arrow 243) acting on both parts 232, 233 of the electrical conductor loop 210 thereby disconnecting both parts 232, 233 of the electrical conductor loop 210, i.e. both sliding elements 234, 235 und thus preventing flow of electrical current through the conductor loop 210. That "non-flow" of electrical current thought the loop 210 is recognized by the monitoring device 206 thereby identifying an open sliding contact 240. Thus, an open sliding contact 241 is indicating a major or extreme deflection of the rotor blade 200.

The detection of an open or closed sliding contact or conductor loop may be based on monitoring at least one electrical characteristic of the electrical conduction loop 210 like, e.g., monitoring an electrical resistance. As an example, an increase of the resistance of the electrical conduction loop 210 by several orders of magnitude within a short time period indicates on open loop circuit and consequently indicates an exceed of a blade deflection beyond an allowable, i.e. defined threshold.

Alternatively or in addition to monitoring the electrical resistance other electrical characteristics of the electrical conductor loop 21 may be monitored by the monitoring device 206 allowing an identification of an open or closed sliding contact 240, i.e. determining a connected or disconnected conductor loop 210.

Alternative methods for monitoring an electrical characteristic of the conductor loop may be, e.g., a measurement of the electrical current through the electrical conductor loop or a measurement of the actual voltage being effective on the electrical conductor loop.

Based on the outcome or result of the measurement, i.e. detection of an open or closed sliding contact 240 und thus detection of an extreme deflection of the rotor blade, operation of the wind turbine will be controlled accordingly thereby avoiding high deflections of the rotor blade.

As an example, in case of a determination of an extreme deflection of the rotor blade, in particular in case of a determination of a extreme deflection of a tip part of the rotor blade several exemplary control options for a proper operation of the wind turbine might be possible:
- switching to a less aggressive mode of operating the wind turbine;
- increasing the blade pitch angle ("pitching out") of at least one of the rotor blades in order to reduce the loading on the blades. This can be, e.g., during gusts with corresponding high blade loading;
- triggering an emergency shutdown;
- a filtered measurement of tip deflection can be used in order to apply a more aggressive pitch control in case, e.g., the deflection levels of the rotor blades are lower than expected for specific ranges of wind speed.

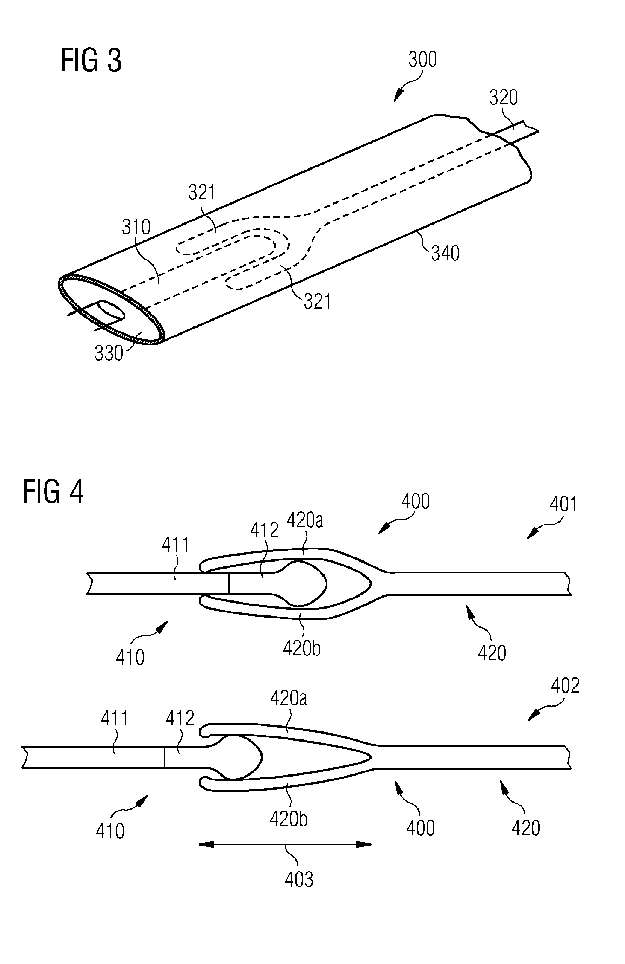

Fig.3 shows in a schematic view an exemplary possible embodiment of a sliding contact 300 which might be used according to the proposed solution. Thereby, a strip element 340 which may be embedded inside the blade comprises a cavity 330 which may be, e.g., filled with a dielectric fluid. A first part of the strip element 340 (representing a first part of the sliding contact 300) comprises an end 311 of a first part 310 of an electrical conductor loop (as exemplarily shown in Fig.2). A second part of the strip element 340 (representing a second part of the sliding contact 300) comprises an end 321 of a second part 320 of the electrical conductor loop. Both ends 311, 321 are correlating to each other thereby providing an "open" or "closed" condition between both parts 310, 320 of the electrical conductor loop.

One or several strip elements 340 may be assigned, fixed or attached to the surface of the rotor blade which may be, e.g., the inner surface of the pressure side of the rotor blade. According to the description above, in case of an extreme deflection of the rotor blade, the surface of the pressure side of the rotor blade will be extended or extracted and thus the fixing points attached to the inner surface will be pulled apart in longitudinal direction. As a consequence, both parts 310, 320 of the conductor loop located in the cavity 330 of the strip element 300 will be pulled apart, switching the sliding contact 300 in "open circuit", thereby providing an electrical disconnection in the electrical conductor loop. That disconnection is indicating an extreme deflection of the rotor blade.

Fig.4 shows in a schematic view an alternative exemplary embodiment of a sliding contact 400 which might be used according to the proposed solution. Thereby, a first part 410 of the sliding contact 400 is representing or is part of a first part of an electrical conductor loop (as exemplarily shown in Fig.2). That part 410 comprises a first section 411 comprising electric conductive material. A second section 412 of the first part 410 consist of dielectric material. Correspondingly, a second part 420 of the sliding contact 400 is representing or is part of a second part of the electrical conductor loop. That part 420 has the shape of a "Y" comprising two ends 420a, 420b, both of them being of electric conductive material. The form or shape of the second part 420 is corresponding to the form or shape of the first part 410 of the sliding contact 400.

In a "closed circuit" condition as exemplarily shown in a scenario 401 in Fig.4, both ends 420a, 420b of the second part 420 of the sliding contact are compassing the second section 412 of the first part 410 of the sliding contact 400 thereby providing an electrical connection between the first section 411 and both ends 420a, 420b of the second part 420 of the sliding contact 400. Thus, in the closed circuit scenario 401 of Fig.4 an electrical resistance of the sliding contact 400 is almost zero indicating a minor deflection of the rotor blade.

In an "open circuit" condition as exemplarily shown in a scenario 402 in Fig.4, both parts 410, 420 of the sliding contact 400 are extended or extracted (indicated by an arrow 403) forced by the elastic deformation of the surface of the blade wherein both ends 420a, 420b of the second part 420 of the sliding contact 400 are electrically separated or isolated by the second section 412 of the first part 410 consisting of dielectric material. By disconnecting the electrical conductor loop, the electrical resistance of the sliding contact 400, e.g., has a substantial high value or is almost endless which is indicating an extreme deflection of the rotor blade.

Although the invention is described in detail by the embodiments above, it is noted that the invention is not at all limited to such embodiments. In particular, alternatives can be derived by a person skilled in the art from the exemplary embodiments and the illustrations without exceeding the scope of this invention.

As an advantage, the proposed solution reacts passively to the deflection of the rotor blade. Being activated by bending, the proposed solution works at high bending levels, thus affecting only extreme load situations of the respective rotor blade while not affection energy production during normal wind turbine operation. As a further advantage, Annual Energy Production (AEP) can be increased during normal turbine operation in combination with different setting of the turbine controller.

The proposed solution can be implemented with minor effort, in particular by using cheap material.

Applying the proposed solution, deflection of the rotor blade, in particular deflection of the tip section of the rotor blade can be reduced. This beneficially allows
- a more aggressive operation of the rotor blades,
- an up scaling or upgrading of rotor blades,
- an minimization or removal of limiting structural constraints

## Claims

1. A method for determining a deflection of a rotor blade (200) of a wind turbine comprising the following steps:
- fixing at least one electrical conductor loop (210) via fixing points (230, 231) to at least one surface (225) of the rotor blade (200), wherein the at least one electrical conductor loop (210) is arranged such that
- due to the deflection of the rotor blade (200) an extension (243) of the at least one conductor loop (210) is forced between at least two of the fixing points (230, 231),
- the extended electrical conductor loop keeps closed if the deflection of the rotor blade (200) is below the defined threshold,
- the extended conductor loop opens if the deflection of the rotor blade (200) is beyond the defined threshold.

2. The method according to claim 1, comprising
- monitoring at least one electrical characteristic of the at least one electrical conductor loop (210),
- determining the deflection of the rotor blade (200) based on the at least one monitored electrical characteristic.

3. The method according to claim 2, wherein
the monitoring of the at least one electrical characteristic comprises a measurement of at least one out of the following electrical parameters concerning the conductor loop (210):
- an electrical resistance,
- an electrical current through the conductor loop,
- a voltage.

4. The method according to any of the preceding claims,
wherein an extreme deflection of the rotor blade is determined
- if the measured electrical resistance of the at least one electrical conductor loop exceeds a predetermined threshold, or
- if the electrical current through the at least one electrical conductor loop drops below a predetermined threshold.

5. The method according to any of the preceding claims,
wherein
the at least one electrical conductor loop (210) is fixed at an inner surface (225) of a pressure side (220) of the rotor blade (200).

6. The method according to any of the preceding claims,
wherein
a control signal is provided for controlling the operation of the wind turbine based on the determined deflection of the at least one rotor blade.

7. An arrangement for determining a deflection of a rotor blade (200) of a wind turbine comprising:
- at least one electrical conductor loop (210) being fixed via fixing points (230, 231) to at least one surface (225) of the rotor blade (200), wherein the at least one electrical conductor loop (210) is arranged such that
- due to the deflection of the rotor blade (200) an extension of the at least one conductor loop (210) is forced between at least two of the fixing points (230, 231),
- the extended electrical conductor loop (210) keeps closed if the deflection of the rotor blade is below a defined threshold,
- the extended conductor loop (210) opens if the deflection of the rotor blade is beyond the defined threshold.

8. The arrangement according to claim 7, comprising
- a processing unit (206) that is arranged for
- monitoring at least one electrical characteristic of the at least one electrical conductor loop (210), and
- determining the deflection of the rotor blade (200) based on the at least one monitored electrical characteristic.

9. The arrangement according to claim 8, wherein
- the processing unit (206) is arranged for providing a control signal for controlling the operation of the wind turbine based on the determined deflection of the at least one rotor blade.

10. The arrangement according to any of the preceding claims 7 to 9, wherein
the at least one electrical conductor loop (210) comprises or is assigned to at least one sliding contact (240) capable of being switched in an open loop circuit (242) or in a closed loop circuit (241) dependent on the deflection of the rotor blade (200).

11. A sensor suitable for determining a deflection of a rotor blade (200) of a wind turbine according to the steps of any of the preceding claims 1 to 6 comprising
- at least one electrical conductor loop (210) suitable to be fixed via fixing points (230, 231) to at least one surface (225) of the rotor blade (200), such that
- due to the deflection of the rotor blade (200) an extension of the at least one conductor loop (210) is forced between the at least two fixing points (230, 231),
- the extended electrical conductor loop (210) keeps closed if the deflection of the rotor blade (200) is below the defined threshold,
- the extended conductor loop opens (210) if the deflection of the rotor blade is beyond the defined threshold.

12. The sensor according to claim 11, comprising
- a processing unit (206) that is arranged for
- monitoring at least one electrical characteristic of the at least one electrical conductor loop (210), and
- determining the deflection of the at least one rotor blade based on the at least one monitored electrical characteristic.

13. A rotor blade for a wind turbine comprising at least one sensor according to claim 11 or 12.

14. A wind turbine comprising an arrangement according to any of the preceding claims 7 to 10.
